# FASCICULE DE BREVET EUROPEEN

(11) **EP 0 672 986 B1**
(45) Date de publication et mention de la délivrance du brevet: **13.10.1999**
(21) Numéro de dépôt: 95400438.8
(22) Date de dépôt: 01.03.1995
(51) Int. Cl.: G06F 11/30

(54) **Procédé d'analyse de système**
Systemanalyseverfahren
System analysis method

(30) Priorité: 10.03.1994 FR 9402789
(43) Date de publication de la demande: 20.09.1995
(73) Titulaire: BULL S.A., 78430 Louveciennes (FR)
(72) Inventeur: Cadot, Michel, F-94100 Saint-Maur (FR)
(74) Mandataire: Denis, Hervé

(56) Documents cités:
- EP-A- 0 259 224
- US-A- 5 058 113
- PROCEEDINGS OF THE 7TH CONFERENCE ON ARTIFICIAL INTELLIGENCE APPLICATIONS, 24 Février 1991 MIAMI BEACH, US, pages 389-392, XP 000299010 SE YOUNG PARK ET AL 'OASiX: A Real-Time Knowledge-Based System for UNIX Operations and Administration'
- IBM TECHNICAL DISCLOSURE BULLETIN., vol. 34,no. 7A, Décembre 1991 NEW YORK US, page 260 XP 000255521 'LAN Disk Space Monitor'
- CH. DEVONEY 'Using PC DOS, 2nd Edition' 1987 , QUE CORP , CARMEL, INDIANA, US Chapter 14: Customizing DOS * pages 301-317 *

## Description

### Domaine technique.

L'invention concerne un procédé d'analyse de système pour déterminer l'état d'un système et éventuellement émettre des recommandations destinées à l'utilisateur du système. Par exemple, le procédé peut s'appliquer à l'administration d'un système de gestion de bases de données (désigné par l'acronyme SGBD), afin d'analyser l'état d'un système de gestion de bases de données et d'émettre des recommandations destinées à l'administrateur. L'invention décrit aussi un support d'information, tel qu'une disquette ou une bande magnétique, incorporant un programme mettant en oeuvre le procédé de l'invention, ainsi qu'un système, notamment un SGBD, mettant en oeuvre le procédé de l'invention.

### L'art antérieur.

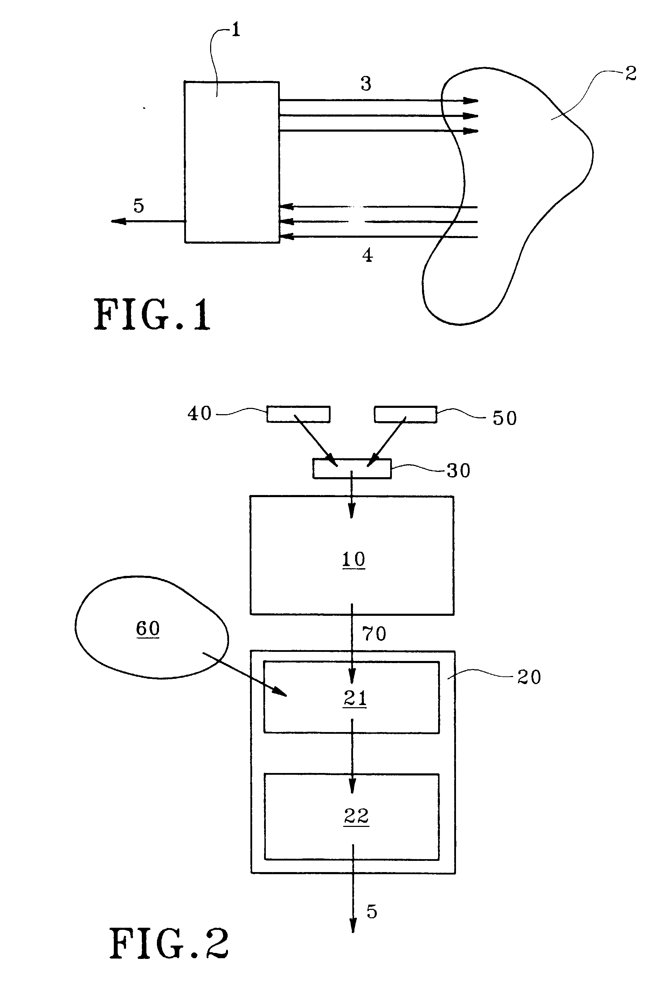

De manière générale, un dispositif d'analyse de système peut être représenté par la figure 1. Le dispositif d'analyse 1 analyse le système 2 à l'aide de jauges 3. Chaque jauge vise à obtenir une information spécifique sur l'état du système 3. Une jauge retourne donc une mesure du système 2. Le résultat 4 retourné par les jauges est transmis au dispositif d'analyse 1. Selon ces résultats, ce dispositif peut émettre des recommandations 5 à destination par exemple d'un utilisateur du système 2.

Par système, nous entendons toute collection d'objets, physiques ou conceptuels, sur lesquels des mesures peuvent être effectuées pour en tirer des informations. Le système 2 peut par exemple être un système de gestion de bases de données, sur lequel un administrateur voudrait obtenir des informations. Le dispositif 1 sera alors par exemple un module incorporé dans un programme d'assistance à l'administrateur de la base de données. L'administrateur peut à intervalles réguliers lancer ce module pour savoir si tout se déroule correctement sur sa base de données et son serveur, ou s'il doit entreprendre une réorganisation. Certaines jauges 3 mesureront par exemple le taux de fragmentation des tables du SGBD, d'autres l'espace disponible pour ces tables. Suivant les résultats 4 obtenus par ces jauges, des recommandations 5 pour l'administrateur seront affichées sur un écran ou écrites dans un fichier d'assistance. Par exemple, la recommandation obtenue sera un message demandant de défragmenter une table ou de libérer de la place sur le disque dur.

Dans un autre exemple, le dispositif 1 peut être un dispositif de diagnostic automatique. Les jauges 3 mesureront alors par exemple le taux de glycémie dans le sang, ou la pression artérielle. Suivant les résultats retournés par ces jauges, des recommandations 5 pour le praticien seront retournées par le dispositif.

Il peut être souhaitable de disposer d'un dispositif d'analyse polyvalent capable de s'adapter à ces tâches très diverses, et d'émettre des recommandations appropriées dans chaque situation, tout en gardant une interface commune pour l'utilisateur et donc un emploi standardisé. Dans le cas où le dispositif 1 est réalisé au moyen d'un programme d'ordinateur, il est en outre souhaitable de pouvoir l'adapter en gardant la plus grande partie possible du code non modifiée. Dans l'art antérieur, cette adaptation était possible seulement en modifiant le code du programme du dispositif 1 et en effectuant une recompilation. Cela nécessitait donc de posséder une copie du code et un programme capable de le compiler. En outre, cette opération nécessitait de solides connaissances en programmation et un temps considérable. Elle n'était donc pas à la portée de l'utilisateur moyen du dispositif 1. En outre, généralement seules des portions réduites du code pouvaient être réutilisées.

Même des adaptations de faible envergure sont difficiles à réaliser dans les solutions de l'art antérieur. En pratique, un administrateur de base de données qui souhaitait disposer d'une jauge non standard pour obtenir des recommandations d'un nouveau type sur son SGBD en était réduit à commander une version personnalisée de son dispositif d'administration. Les seuils de déclenchement des jauges, c'est-à-dire les valeurs des résultats 4 à partir desquels une recommandation est émise, pouvaient être ajustés seulement dans les cas les plus rares. Si certaines informations, qui peuvent être lentes à obtenir, ne sont d'aucun intérêt pour l'administrateur, il n'avait généralement aucune possibilité d'y renoncer.

### L'invention.

Le but de l'invention est donc de créer un outil d'analyse suffisamment général pour pouvoir être adapté à l'analyse de systèmes très divers, tout en gardant une interface commune pour l'utilisateur.

Un autre but est de disposer d'un procédé d'analyse de système comportant un maximum d'étapes indépendantes du système à analyser.

Un autre but est de disposer d'un dispositif d'analyse informatique de système pouvant être adapté à l'analyse d'un système quelconque sans recompilation du code.

Un autre but est de permettre à l'utilisateur d'un tel dispositif d'ajouter, de supprimer ou de modifier des jauges le plus facilement possible.

Un autre but est de lui permettre d'utiliser un seul dispositif pour effectuer les analyses les plus diverses sur différents systèmes.

Ainsi, l'invention concerne un procédé d'analyse de système polyvalent à l'aide d'un ensemble de jauges, dans lequel toutes les caractéristiques propres au système sont contenues dans des fichiers de données.

L'invention telle que défini dans la revendication 1 a pour objet un procédé d'analyse de système à l'aide d'un ensemble de jauges, chaque jauge étant associée à au moins une fonction de jauge retournant une valeur dépendant de l'état du système analysé, la valeur retournée par les fonctions de jauge étant utilisée au cours du procédé pour afficher sur un écran ou écrire dans un fichier des recommandations pour le système, caractérisé en ce que les fonctions de jauges appliquées au système analysé sont contenues dans un fichier de jauges situé en un seul endroit et dont le format est de type texte, et en ce qu'il consiste à créer à partir de ce fichier des jauges un fichier de commandes pouvant être commandé par l'utilisateur pour contenir la désignation des fonctions de jauge à appliquer au système à analyser.

Les caractéristiques du préambule de la revendication 1 sont connues du document EP-A-0 259 224.

Selon une autre caractéristique de l'invention, au moins une partie des fonctions de jauge est désignée dans le fichier de données par le nom et le chemin de données d'un programme exécutable.

Selon une autre caractéristique de l'invention, au moins une partie des fonctions de jauge est désignée dans le fichier de données par le texte d'une requête, une requête SQL par exemple.

Selon une autre caractéristique de l'invention, chaque jauge est associée à au moins une recommandation et la liste des recommandations est contenue dans un fichier de données.

Selon une autre caractéristique de l'invention, chaque jauge est en outre associée à au moins une valeur de seuil numérique ou logique, les recommandations sont émises lorsque les valeurs retournées par les fonctions de jauge sont dans une certaine relation avec le seuil associé, et la liste des valeurs de seuil numérique est contenue dans un fichier de données.

Selon une autre caractéristique de l'invention, dans la liste des valeurs de seuil numérique un symbole (>, <, =, ...) est associé aux seuils numériques, ledit symbole indiquant si la recommandation associée doit être déclenchée lorsque la valeur retournée par la fonction de jauge associée passe au-dessus ou au-dessous du seuil ou lorsqu'elle n'a pas la valeur de seuil ou lors de toute autre relation logique entre la valeur de seuil et la valeur retournée par la fonction de jauge.

Selon une autre caractéristique de l'invention, le procédé comprend un fichier de données d'alarmes pour contenir une liste de seuils d'alarme des jauges associées aux fonctions de jauges désignées dans le fichier de commande.

Selon une autre caractéristique de l'invention,
- les jauges sont regroupées en investigations,
- un fichier d'investigation comprenant la liste des investigations, des jauges constituant ces investigations et des désignations des fonctions de jauge globales associées à au moins une partie des investigations,
- un fichier de jauge comprenant la liste de toutes les jauges, de toutes les recommandations associées, des seuils associés au moins à certaines jauges et des fonctions de jauge associées au moins à certaines jauges,
- le fichier de configuration pouvant être établi à partir des données du fichier de jauge et des données du fichier d'investigation.

Selon une autre caractéristique de l'invention, le procédé comporte une étape de sélection des jauges à appliquer au système à l'aide d'une interface graphique permettant de choisir un fichier de configuration, une étape d'application au système analysé des jauges listées dans le fichier de configuration à l'aide d'un module moteur, et une étape d'émission de recommandations à l'aide d'un module d'émission. L'interface graphique, le module moteur et le module d'émission sont indépendants du système à analyser.

Selon une autre caractéristique de l'invention, l'interface graphique permet de visualiser sur un écran une liste au moins partielle des jauges contenues dans le fichier de configuration sélectionné et regroupées en investigations et de sélectionner les jauges et/ou les investigations que l'on veut lancer pour analyser ledit système.

L'invention s'applique à l'analyse d'un système, plus particulièrement à un système de gestion de base de données. Dans le contexte d'un SGBD, une caractéristique de l'invention réside dans le fait que le fichier de jauge contient au moins une jauge de test de la fragmentation des tables du SGBD. Le fichier de jauge peut aussi contenir une jauge de test de l'espace libre pour les tables du SGBD.

L'invention décrit aussi un support d'information, tel qu'une disquette ou une bande magnétique, incorporant un programme mettant en oeuvre le procédé de l'invention, ainsi que tout système, notamment un SGBD, mettant en oeuvre ce procédé.

D'autres caractéristiques et avantages de l'invention apparaîtront à la lecture de la description, donnée ci-après à titre d'exemple et illustrée à l'aide des dessins annexés.
- La figure 1 illustre de manière générale un dispositif d'analyse de système et d'émission de recommandations ;
- La figure 2 illustre les différents modules d'un dispositif utilisant le procédé de l'invention ;
- La figure 3 illustre à titre d'exemple un écran d'accueil affiché par un programme utilisant le procédé de l'invention ; et
- La figure 4 illustre à titre d'exemple un autre écran affiché par un programme utilisant le procédé de l'invention.
Pour des raisons de clarté de la description, le procédé sera utilisé à titre d'exemple pour l'analyse d'un SGBD. Plus précisément, l'exemple porte sur un outil d'analyse incorporé dans un programme d'assistance à l'administrateur d'un SGBD connu sous la marque déposée Oracle, produit par la société ORACLE Corp, utilisant le langage normalisé SQL (Structured Query Language) et opérant sur une station Unix, marque déposée par la société UNIX System Laboratories, Inc. Cet exemple d'utilisation n'est toutefois nullement limitatif, l'un des avantages de l'invention étant précisément de pouvoir s'adapter aisément à l'analyse de système très divers.

L'analyse de l'état d'un système en général, et en particulier d'un SGBD, peut se faire à l'aide d'une série d'investigations. Une investigation peut par exemple concerner la fragmentation des données, une autre l'espace disponible pour les tables. Chaque investigation peut être décomposée en un ensemble d'informations que nous appellerons jauges. Ainsi, l'investigation d'espace disponible peut être décomposée en une jauge détectant qu'il n'y a presque plus de place pour certaines tables, et une autre indiquant une croissance forte des tables. Chaque jauge est associée à une fonction de jauge, qui effectue une analyse sur le système. Les fonctions de jauge retournent un résultat numérique ou booléen caractérisant l'état de chaque objet du système analysé. En outre, chaque jauge est associée à une recommandation. La recommandation peut consister en un message prévenant par exemple l'utilisateur de la nécessité de défragmenter certaines tables, ou de libérer de l'espace pour d'autres tables. Chaque jauge peut avoir une valeur associée: le seuil de déclenchement de la recommandation. Le seuil de déclenchement peut être numérique: par exemple, le taux de fragmentation à partir duquel une recommandation est émise. Il peut aussi être logique, pour les jauges retournant une valeur booléenne. Par exemple on peut imaginer une jauge retournant la valeur booléenne "1" si des objets du SGBD ont atteint le nombre maximum d'extensions (extents) autorisé. Le seuil logique à partir duquel une recommandation est émise est donc égal à la valeur logique "1". A ce seuil est associé un symbole >, < ou # indiquant si la recommandation est émise lorsque la valeur retournée par la jauge passe au-dessus ou au-dessous du seuil ou si elle n'a pas la valeur du seuil. D'autres types de relation (supérieur ou égal, etc...) peuvent naturellement être imaginés. Particulièrement pour les seuils logiques, cette relation peut être implicite. Dans ce cas, toutes les jauges retournant une des valeurs booléennes, par exemple "1", font donc l'objet d'une recommandation émise. Les recommandations peuvent être des simples chaînes de caractères affichées à l'écran ou écrites dans un fichier de recommandations. De manière préférable, ces chaînes sont paramétrables, dans le format utilisé pour la fonction printf() du langage C, qui utilise des paramètres de type %s et %d. Une recommandation typique sera par exemple:
"L"'espace de table" ("tablespace" dans la terminologie Oracle)%s est presque rempli (taux d'occupation = %d%%). Vous pouvez ajouter des fichiers de base de données pour élargir cet espace."
Dans cet exemple, le paramètres %s prend à l'affichage le nom des espaces de tables (tablespaces) concernés et le paramètre %d le taux d'occupation correspondant.

La figure 2 illustre un dispositif utilisant le procédé de l'invention. Le dispositif est décomposé en deux couches: une interface utilisateur 10 et un module moteur 20. L'interface entre ces deux couches se fait via un fichier de commande 70, décrit par la suite, qui indique au module moteur tous les paramètres nécessaires pour mener les investigations. Le module moteur peut être décomposé en deux blocs fonctionnels, le module d'analyse 21 et le module d'enquête 22. Cette décomposition est purement fonctionnelle et ne correspond pas forcément à une réalisation séparée des deux modules. Le module d'analyse et le module d'enquête peuvent ainsi ne former qu'une seule entité. Le module moteur effectue les investigations demandées dans le fichier de commande sur le système à analyser. Pour cela, le module d'analyse analyse le fichier de commande qui lui est transmis tandis que le module d'enquête appelle successivement les différentes fonctions associées aux jauges et aux investigations. Certaines fonctions de jauge 60 peuvent être externes, c'est-à-dire stockées dans des modules ou des programmes indépendants du dispositif. D'autres fonctions de jauge peuvent être internes au module d'enquête. Le module d'enquête détermine les objets du système analysé sur lesquelles des recommandations doivent être émises. Ces objets peuvent être par exemple des tables du SGBD devant être défragmentées. Le module d'enquête affiche sur l'écran de l'administrateur du SGBD ou écrit dans un fichier de recommandation des recommandations 5 portant sur ces objets et concernant l'administration du SGBD ou du serveur.

L'interface utilisateur 10 est de préférence réalisée sous la forme d'un module d'interface graphique. Après le lancement du dispositif, l'interface lit un fichier de configuration 30 et l'affiche. Le fichier de configuration est de manière préférentielle un fichier de texte, un fichier ASCII dans le présent exemple, enregistré dans une mémoire de masse. Nous reviendrons plus tard sur ce fichier de configuration. Les données du fichier de configuration proviennent d'un fichier de jauge 40 et d'un fichier d'investigation 50, également décrit par la suite.

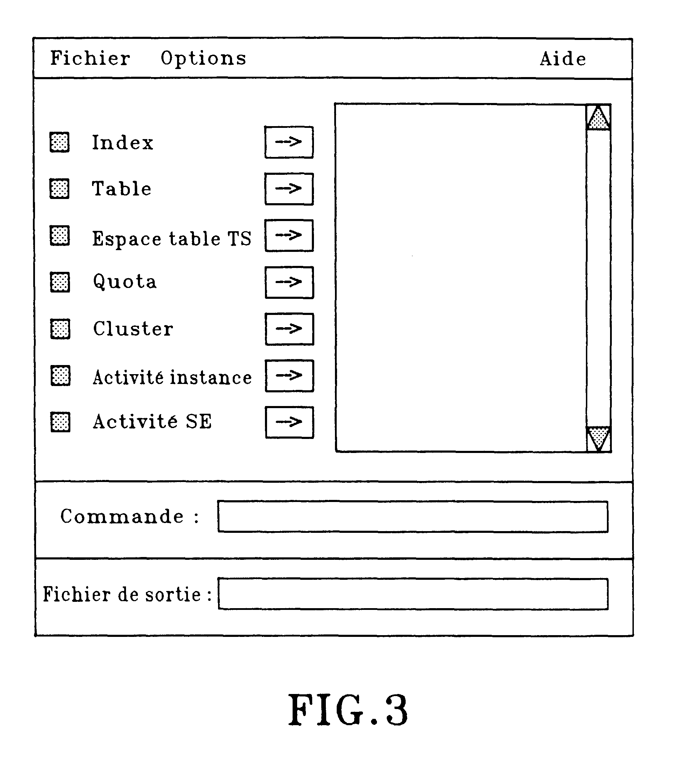

L'écran affiché par l'interface graphique au lancement du dispositif est illustré dans la figure 3. Ces informations sont de préférence contenues dans une fenêtre occupant une portion réduite de l'écran. Cette fenêtre contient cinq parties:
1. Une barre de menu comprenant les menus Fichier, Options et Aide.
2. Une liste à gauche, que nous appellerons la liste des investigations.
3. Une liste déroulante à droite, que nous appellerons la liste des jauges.
4. Un champ Commande.
5. Un champ Fichier de sortie.
Le menu Aide permet d'obtenir des informations d'aide à l'utilisateur. Le menu Options permet par exemple de faire apparaître une boîte de dialogue permettant à l'utilisateur de choisir la durée de la surveillance et la période d'échantillonnage, pour les investigations qui utilisent ces paramètres que nous expliquerons par la suite. Le menu Fichier propose les choix suivants:
- "Nouveau" pour générer un nouveau fichier de configuration à partir du fichier des investigations et du fichier des jauges.
- "Ouvrir..." pour charger un fichier de configuration choisi dans une liste déroulante, le premier fichier proposé dans la liste étant le fichier de configuration par défaut.
- "Sauver" pour enregistrer le fichier de configuration courant.
- "Sauver sous..." pour enregistrer le fichier de configuration courant en spécifiant un nom.
- "Imprimer..." pour imprimer le fichier de configuration courant.
- "Exécuter" pour lancer les investigations du fichier de configuration courant.
- "Quitter" pour quitter le programme.
La partie "liste des investigations" contient la liste des investigations menées sur le système analysé et qui vont éventuellement conduire à émettre des recommandations. Dans le cas d'une utilisation du dispositif pour les besoins d'un administrateur de base de données (désigné par l'acronyme ABD), ces investigations sont présélectionnées et l'ABD novice n'a qu'à activer la commande Exécuter du menu Fichier pour obtenir les recommandations sur le SGBD. L'utilisateur souhaitant n'avoir que certains renseignements désélectionne les investigations non désirées puis clique sur la commande Exécuter.

Lors de l'activation du dispositif, la fenêtre affiche le contenu du fichier de configuration par défaut. Ce fichier de configuration par défaut sera par exemple écrit pour une utilisation particulière, comme l'administration de SGBD ou le diagnostic. Par la commande Ouvrir du menu Fichier, l'utilisateur peut charger un autre fichier de configuration préalablement enregistré par une des commandes Sauver ou Sauver Sous, lui donnant directement la liste des investigations désirées.

Les investigations présentées dans cette figure ne sont naturellement qu'un exemple pour le cas particulier de l'utilisation du dispositif pour l'administration de base de données.

Le champ Commande permet de donner le nom et les paramètres d'une commande ou d'un programme exécutable qui sera lancé à la fin de l'utilisation. Dans un environnement de SGBD de type Oracle, une commande pourra de manière préférentielle être au format SQL, ou un programme être un programme exécutable UNIX quelconque. Cette facilité permet d'enchaîner le programme de recommandations avec un autre programme.

Le champ Fichier de Sortie permet à l'utilisateur de donner le nom du fichier dans lequel il pourra retrouver les recommandations. Un nom par défaut lui sera proposé dans le fichier de configuration par défaut. Un nom particulier lui permettra d'afficher directement les recommandations sur un écran ou une imprimante connectés au dispositif.

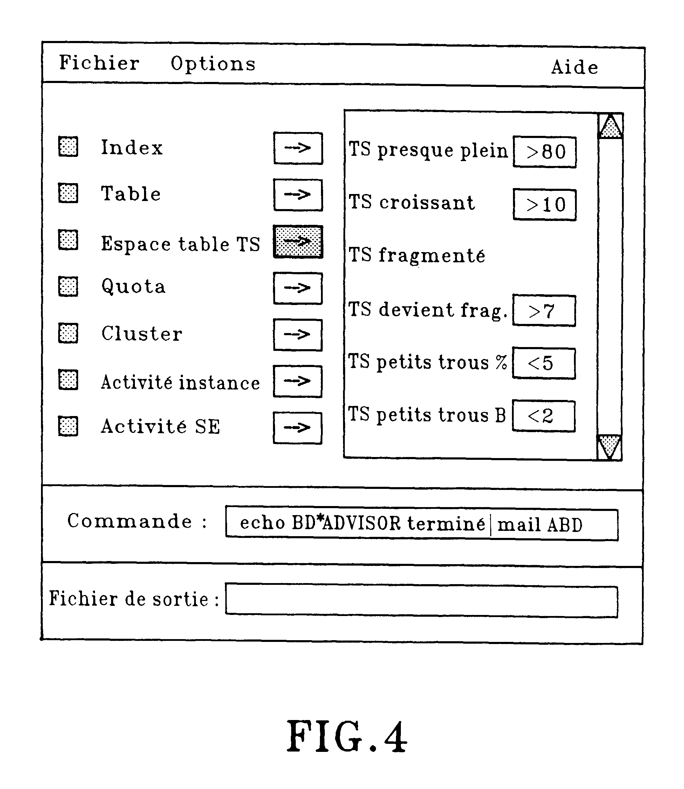

L'utilisateur plus averti peut obtenir des informations supplémentaires en cliquant sur le bouton à droite d'une des investigations; celui-ci passe alors en vidéo inverse, et la liste des jauges associées à cette investigation apparaît dans la partie liste des jauges. Un exemple est illustré par la figure 4. Nous voyons ici que l'investigation appelée "tablespace" dans la terminologie propre à la base de données Oracle (TS, en abrégé) et qu'on appellera "espace de tables" (TS), est composée de plusieurs jauges. A la plupart de ces jauges est associé une valeur de seuil numérique, à partir de laquelle une recommandation sera écrite sur le fichier de sortie sélectionné. Par exemple, la jauge "TS presque plein" est associée au seuil numérique 80. Une jauge peut, comme "TS fragmenté" dans l'exemple, ne pas avoir de valeur de seuil associée: ce sont des jauges associées à des fonctions de jauge retournant une valeur booléenne, et la notion de seuil est alors implicite. Par exemple, une recommandation est émise si la valeur logique retournée par la fonction de jauge vaut "1". La valeur des seuils numériques est lue dans le fichier de configuration et peut être modifiée directement par l'utilisateur à l'écran. Un symbole de relation, par exemple <, >, ou # est lié à chaque valeur de seuil. Ce symbole indique si la recommandation doit être émise lorsque le résultat retourné par la fonction de jauge est inférieure, supérieure ou différente de la valeur du seuil numérique associé. Ainsi la recommandation associée à la jauge "TS presque plein" sera émise si la fonction de jauge associée retourne une valeur numérique supérieure à 80.

La recherche se fait pour tous les objets du système pour lesquels la jauge à une signification. Dans notre exemple, pour les jauges composant l'investigation Espace de Tables, ce sera pour tous les espaces de tables (tablespaces) du SGBD.

Après l'activation du dispositif, l'interface graphique lit et affiche le contenu du fichier de configuration par défaut. L'utilisateur a la possibilité par la commande Ouvrir de choisir un autre fichier de configuration. n peut en cliquant désélectionner certaines investigations, et modifier les valeurs de seuil associées aux jauges. Puis il lance l'analyse du système par la commande Exécuter. L'interface graphique génère alors un fichier de commandes décrivant la sélection faite par l'utilisateur, et lance le module moteur en lui passant ce fichier en argument et en redirigeant la sortie standard vers le fichier donné dans le champ "Fichier de Sortie". Ce fichier peut être un fichier texte quelconque, ou directement un écran ou une imprimante connecté au dispositif.

Le module moteur analyse ensuite le fichier de commandes qui lui est transmis et appelle successivement les différentes fonctions de jauge qui génèrent les recommandations. A la fin, le module moteur lance l'éventuelle commande donnée par l'utilisateur.
Nous allons maintenant décrire le contenu du fichier des jauges dont un extrait se trouve en exemple dans l'annexe jointe à la fin de la description. Ce fichier donne les définitions des jauges. Il regroupe en un seul endroit les définitions de toutes les jauges utilisées pour un type d'application donnée (SGBD ou diagnostic automatique par exemple), permettant ainsi des modifications ou des ajouts en intervenant en un seul endroit. Ce fichier est utilisé par le module d'interface graphique pour créer un nouveau fichier de configuration à l'aide de la commande Nouveau du menu Fichier. Les jauges sont regroupées en domaines et sous-domaines. Cette classification n'est pas indispensable au fonctionnement du dispositif, elle permet toutefois notamment de clarifier la lecture du fichier des jauges. Ce fichier est un fichier de données au format texte (ASCII). Il est donc modifiable au moyen d'un simple éditeur de texte. Comme il obéit à des règles de syntaxe assez strictes, il est toutefois préférable de l'éditer au moyen d'un programme de visualisation et de modification spécialisé utilisant de manière préférentielle une interface graphique. Ce programme n'est pas décrit ici, car il ne participe pas directement à l'invention.

Chaque ligne du fichier de jauges est constituée d'un ou plusieurs mots-clés (indiqués en gras dans l'annexe) et de valeurs associées.
- Le mot-clé "domain" introduit un nouveau domaine qui se termine par le mot-clé "end-domain", de même que le mot-clé "subdomain" introduit un nouveau sous-domaine qui se termine par le mot-clé "end-subdomain". Les noms des domaines et des sous-domaines doivent être uniques. La définition d'une jauge est comprise entre les mots-clés "gauge" et "end-gauge" et a un certain nombre de paramètres:
- le nom de la jauge, sur la même ligne que le mot-clé "gauge".
- éventuellement, entre "comment" et "end-comment", un commentaire associé qui indique la signification de la jauge.
- éventuellement un seuil et un symbole de relation, introduits par le mot-clé "threshold". Certaines jauges n'ont pas de seuil associé, telle la jauge "TS fragmenté" dans l'exemple.
- éventuellement une désignation de fonction de jauge introduite par le mot-clé "advice-function". Cette fonction de jauge retourne soit une valeur booléenne indiquant qu'une recommandation doit être émise, soit une valeur numérique qui sera comparée à l'aide du symbole de relation à la valeur de seuil associée à la jauge pour émettre une recommandation.
- entre les mots-clés "advice" et "end-advice", la recommandation associée à la jauge. Cette recommandation est paramétrable comme expliqué plus haut dans le style du format du langage C. Une jauge peut être associée à plusieurs recommandations.
Dans une réalisation du dispositif plus spécifiquement adaptée à une application d'administration de SGBD, les fonctions de jauge peuvent être de trois types:
- le mot-clé DBA_EXPERT_INTERNAL précédant une désignation de fonction de jauge indique que la jauge utilise une fonction interne au module moteur, qui l'exécutera donc directement. L'utilisateur ne peut ni ajouter ni modifier les fonctions de jauge de ce type sans recompiler le module moteur en accédant à son code. Leur usage sera donc de préférence réservé soit à des jauges d'intérêt très général, soit à des jauges pour lesquelles les contraintes de vitesse sont impératives.
- le mot-clé DBA_EXPERT_SQL introduit le texte d'une requête SQL, terminé par une ligne ne contenant que le mot-clé "end-advice-function". Cette requête devra retourner deux valeurs: objet (par exemple, nom de table), et valeur (par exemple, nombre d'extensions), et sera exécutée par le module moteur en utilisant la valeur de seuil introduite par le mot-clé "threshold". La valeur objet désigne tous les objets du système analysé pour lesquels les recommandation associées à la jauge doivent être émises.
- les désignations des fonctions de jauge de type programme exécutable ne sont introduites par aucun mot-clé spécifique. Le nom et le chemin du programme sont directement donnés après le mot-clé "advice-function". Ces fonctions pourront être écrites directement par l'utilisateur.

Nous allons maintenant décrire le contenu du fichier des investigations dont un extrait se trouve en exemple à la suite de l'annexe jointe à la fin de la description. Ce fichier donne les définitions des investigations. Il permet de regrouper en un seul endroit les définitions des investigations, permettant ainsi des modifications ou des ajouts en intervenant en un seul endroit. L'intérêt des investigations est de regrouper plusieurs jauges possédant une signification ou un fonctionnement voisin. Le regroupement des jauges en investigations est non seulement apparent sur l'écran affiché par l'interface graphique; mais il intervient également lors de l'analyse du système, comme on va le voir. De la même manière que le fichier de jauge, ce fichier est un fichier de données au format texte (ASCII) éditable au moyen d'un éditeur de texte ou d'un programme spécialisé utilisant une interface graphique. Ce fichier est utilisé conjointement avec le fichier des jauges par le module d'interface graphique pour créer de nouveaux fichiers de configuration à l'aide de la commande Nouveau du menu Fichier. L'architecture et la syntaxe de ce fichier sont similaires à celles du fichier des jauges.

Les investigations sont regroupées en domaines. Cette classification n'est pas indispensable au fonctionnement du dispositif, elle permet toutefois notamment de clarifier la lecture du fichier des investigations. Les domaines ne sont pas forcément les mêmes que ceux définis dans le fichier de jauge, même si une concordance est recommandée. Une investigation est constituée d'un ensemble de jauges. Le but du fichier des investigations est de décrire l'organisation des jauges en investigations. Une investigation peut être associée à une fonction de jauge globale, introduite par le mot-clé "advice-function". Cette fonction peut être d'un des types définis en relation avec le fichier de jauges (interne, SQL ou externe). Dans une relation préférentielle toutefois, cette fonction ne pourra prendre que le type interne ou externe. L'intérêt d'avoir une fonction de jauge globale se présente lorsque les différentes jauges d'une investigation utilisent les mêmes informations, ou des informations proches que l'on peut facilement récolter avec une seule enquête. Cette fonction de jauge est alors appelée une seule fois pour toutes les jauges de l'investigation. Toutefois, si une jauge est déjà associée à une fonction dans le fichier d'investigation, celle-ci sera utilisée pour l'analyse du système.

Nous allons maintenant décrire le contenu du fichier de configuration dont un extrait se trouve en exemple à la suite de l'annexe jointe à la fin de la description. Ce fichier est bâti à partir des indications du fichier des jauges et du fichier des investigations en utilisant la commande Nouveau du menu Fichier dans l'interface graphique. D'autres fichiers peuvent exister et être chargés avec la commande Ouvrir du même menu. De même que le fichier des jauges et le fichier des investigations, le fichier de configuration est un fichier de données au format texte (ASCII). L'architecture et la syntaxe sont similaires à celles des autres fichiers. On retrouve les indications de domaines, d'investigations, de jauges avec éventuellement leurs seuils associés et le symbole de relation associé, ainsi que la désignation des fonctions de jauge, qui peuvent être d'un des trois types précités (internes, externes ou SQL). Le mot-clé "command" introduit la commande à lancer après la fin de l'analyse. Dans l'exemple donné en annexe, cette commande est une commande SQL qui provoque l'envoi d'un message à l'ABD. Le mot-clé "output" introduit le nom du fichier de sortie. Les domaines sont ceux indiqués dans le fichier des investigations. Ils peuvent être visuellement séparés dans l'interface graphique (par exemple, par un trait discontinu entre les domaines dans la liste des investigations). D'autre part, il existe un fichier de configuration de base: c'est le fichier par défaut qui est chargé automatiquement au lancement du dispositif. Dans la boîte de dialogue affichée par la commande Ouvrir du menu Fichier, ce fichier est désigné par le nom DB_ADVISOR_DEFAULT.

Nous allons maintenant décrire le contenu du fichier de commandes dont un extrait se trouve en exemple à la suite de l'annexe jointe à la fin de la description. Ce fichier est généré par le module d'interface graphique à partir du fichier de configuration en tenant compte des éventuelles modifications choisies par l'utilisateur et transmis en paramètre au module moteur. Celui-ci l'analyse ensuite pour générer les investigations sur le système analysé. A la fin des investigations, ce fichier est détruit. Comme tous les autres fichiers de données introduits, c'est un fichier au format texte (ASCII), constitué d'un ensemble de mots-clés (paramètres) et valeurs associées. L'exemple donné en annexe reprend les exemples donnés pour les autres fichiers. Ce fichier donne pour chaque jauge les indications associées suivantes: la désignation de la fonction de jauge associée, éventuellement le niveau de seuil et le symbole de relation associé, et la recommandation. Les jauges sont regroupées en investigations, certaines investigations pouvant avoir des fonctions de jauge globales associées. L'organisation des investigations en domaines n'est pas utilisée ; en effet cette organisation est importante essentiellement pour la présentation de l'interface graphique. Le mot-clé "sampling" introduit sur la même ligne la durée (précédée par le mot-clé "duration") et la période (précédée par le mot-clé "period") d'échantillonnage pour les investigations qui ont besoin de ces notions. Le mot-clé "command" introduit la commande à lancer après les différentes investigations.

Nous allons maintenant expliquer les divers modes d'utilisation du dispositif. Le mode novice est le plus simple d'utilisation. L'utilisateur débutant lance le dispositif, qui charge automatiquement le fichier de configuration par défaut, et lance simplement les investigations en cliquant sur la commande Exécuter du menu Fichier. Après la fin de l'analyse du système, il peut lire les recommandations dans le fichier de sortie (éventuellement directement sur l'écran).

Le mode intermédiaire permet à l'utilisateur de choisir les investigations qu'il veut mener sur son système. Il choisit dans la liste des investigations affichées par l'interface graphique celles qui l'intéressent. Il peut sauvegarder ses choix dans un nouveau fichier de configuration, et le recharger ultérieurement grâce à la commande Ouvrir du menu Fichier.

Le mode expert permet à l'utilisateur averti de modifier les seuils associés aux jauges constituant les investigations, selon la méthode évoquée en relation avec la figure 4.

L'utilisateur qui souhaite ajouter des jauges procède de la manière suivante. Tout d'abord, il ajoute les définitions des nouvelles jauges dans le fichier des jauges, y compris les valeurs des seuils éventuels, les symboles de relation, les recommandations et les désignations des fonctions associées. Les fonctions associées à ces nouvelles jauges peuvent par exemple être des nouveaux programmes analysant un aspect du système, et retournant soit une valeur booléenne, soit une valeur numérique qui est comparée avec la valeur de seuil pour émettre la recommandation. Ces nouveaux programmes sont créés et compilés indépendamment des autres constituant le dispositif. Ensuite, il édite le fichier des investigations, pour redéfinir l'organisation des jauges en investigations et en domaines. Si nécessaire, de nouveaux domaines et de nouvelles investigations peuvent être crées pour ces jauges. Le fichier des jauges ainsi que le fichier des investigations peuvent tous les deux être édités au moyen d'un simple éditeur de texte supportant un format texte, ou mieux au moyen d'un outil graphique spécialisé, afin d'éviter les problèmes de syntaxe liés à ces deux fichiers.

Une fois le module d'interface graphique lancé, la commande Nouveau du menu Fichier permet de créer un nouveau fichier de configuration à partir du fichiers des jauges et du fichier des investigations modifiés. Ce fichier peut encore être modifié au moyen de l'interface graphique, et sauvé avec ces modifications pour une utilisation ultérieure grâce à la commande Sauver du menu Fichier. La modification ou la suppression de jauges pour adapter le dispositif à un nouveau système ou pour modifier l'analyse du même système s'effectue de manière similaire. Seules les fonctions associées aux jauges concernées doivent être éventuellement recompilées.

Nous allons maintenant décrire plus en détail le fonctionnement du module moteur. Le module moteur est lancé par la commande Exécuter du menu Fichier de l'interface graphique. Une fois activé, il affiche une icone sur l'écran puis effectue la connexion au système analysé. Par exemple, il se connecte au SGBD Oracle. Il ouvre ensuite ou crée si nécessaire le fichier de recommandations, puis ouvre le fichier de commandes créé par le module d'interface graphique et l'analyse séquentiellement. Il lance en synchrone les fonctions associées aux investigations demandées dans le fichier de commande. Pour chaque investigation, le module moteur regarde s'il y a une fonction de jauge globale qui lui est associée. Si c'est le cas, celle-ci est passée avec, en paramètre, la liste des jauges avec leurs seuils et désignations de fonctions associés puis, pour chaque jauge de cette investigation associée à sa propre fonction, le module moteur lance de la même manière la fonction associée. Dans le cas où aucune fonction de jauge globale n'est associée à l'investigation, le module moteur lance une à une les fonctions associées à chaque jauge de l'investigation. Ces fonctions peuvent être soit des fonctions internes, soit des programmes exécutables externes, soit, dans le cas de l'utilisation pour un ABD, des fonctions appelant des requêtes SQL. Dans le cas de fonction interne, le module moteur l'appelle en lui passant le nom de la jauge ou de l'investigation ainsi que les paramètres nécessaires, cette fonction appelant généralement une autre fonction chargée de mener réellement l'investigation. Cette architecture correspond au découpage du module moteur en un module 21 d'analyse du fichier de commande et un module 22 d'enquête, comme illustré sur la figure 2. Dans le cas d'une fonction externe, le module moteur la lance de manière synchrone. Enfin, dans le cas d'une requête SQL, le module moteur appelle une fonction SQL_fonction dans le module d'enquête 22 en lui passant le nom de la jauge; cette fonction se chargeant de mener l'investigation et de générer les recommandations.

Une fois les investigations terminées, le module moteur ferme et détruit le fichier de commande, se déconnecte du système analysé puis enfin lance l'éventuelle commande utilisateur avant de faire passer l'icone sur l'écran en mode vidéo inverse pour signaler la fin de l'exécution. L'utilisateur peut alors lire les recommandations pour le système dans le fichier de recommandations.

Le module 21 d'analyse du fichier de commande lit tout d'abord la première ligne du fichier de commande et enregistre les options d'échantillonnage choisies. Puis, pour chaque investigation, il vérifie la présence d'une fonction de jauge globale. Si celle-ci existe et que la fonction globale est de type interne, il construit à partir de la liste des jauges constituant l'investigation une structure de données à passer à la fonction global_conseil du module d'enquête. S'il s'agit d'une fonction externe, le module d'analyse crée un fichier de commande restreint à l'investigation, lance en synchrone le programme exécutable en lui passant en paramètre le nom du fichier et celui de l'investigation, puis détruit le fichier de commande temporaire. Après l'exécution de la fonction de jauge globale, le module d'analyse du fichier de commande lance la fonction associée individuellement à chaque jauge si elle existe. Dans le cas où la fonction de jauge globale n'existe pas, il y a, pour chaque jauge de l'investigation, construction d'une structure et activation de la fonction jauge_conseil (fonction interne) ou SQL_fonction (requête SQL) du module d'enquête, selon le type de la fonction de jauge. Si le type est externe, le module d'analyse lance la fonction selon la procédure décrite ci-dessus pour les fonctions de jauge globales externes, en passant cette fois en paramètre le nom de la jauge.

Chaque fonction exécutée écrit dans le fichier de recommandation la recommandation associée en cas de dépassement de seuil numérique ou logique.

La fonction jauge_conseil() et la fonction global_conseil() font le lien entre le module d'analyse du fichier de commande et le module d'enquête. La fonction jauge_conseil() signale au module d'enquête que les recommandations sur la jauge passée en paramètre sont demandées. Le module d'enquête se charge de l'écriture des recommandations sur le fichier passé en paramètre. La valeur de retour de cette fonction est un code d'erreur qui vaut 0 s'il n'y a pas eu d'erreur. Le prototype est le suivant :
int jauge_conseil(FILE *fichier_sortie, Jauge *jauge, Option *option);
Le paramètre jauge est une variable de type structure qui donne toutes les indications sur la jauge, le seuil associé, le symbole de relation associé et la fonction de jauge associée. Le paramètre option donne les indications sur les options d'échantillonnage (durée et période), qui peuvent être utilisées par la fonction de jauge.

La fonction global_conseil() signale au module enquêteur que les recommandations sur l'investigation passée en paramètre sont demandées. Le module d'enquête se charge de l'écriture des recommandations sur le fichier passé en paramètre. La valeur de retour de cette fonction est un code d'erreur qui vaut 0 s'il n'y pas eu d'erreur. Le prototype est le suivant:
int global_conseil(FILE fichier_sortie, char *cons_investig, Jauge *jauge[], Option *option);
Le paramètre cons_investig donne le nom de l'investigation. Le paramètre jauge donne toutes les informations nécessaires sur les jauges de l'investigation. La fonction globale ne devra pas produire de recommandation pour les jauges de l'investigation associée à leur propre fonction. Enfin le paramètre option indique les options d'échantillonnage.

La fonction SQL_fonction est appelée par le module d'analyse du fichier de commande lorsqu'il détecte qu'une jauge est associée à une fonction de type SQL. Elle est donc utilisée dans le cas d'une application du dispositif de l'invention pour l'administration de base de données. Elle retourne un code d'erreur qui vaut 0 si tout s'est bien passé. Son prototype est le suivant:
int SQL_fonction(FILE *fcom, Jauge *jauge);
Le paramètre fcom désigne le fichier de recommandation. Le paramètre jauge donne toutes les informations nécessaires sur les jauges sur lesquelles doit porter la requête SQL. La fonction récupère le texte de la requête SQL associée à la jauge puis l'exécute, et le cas échéant écrit des recommandations dans le fichier de recommandation passé en paramètre.

Nous allons maintenant donner quelques indications sur la manière d'écrire les fonctions externes. Les fonctions externes sont réalisées par des programmes exécutables. Ceux-ci acceptent les paramètres -f, -o, -i et -g donnant respectivement le nom du fichier de commande restreint lui donnant les informations sur l'investigation à mener, le nom du fichier de recommandation, le nom de l'investigation concernée ou de la jauge concernée. Ces programmes ouvrent le fichier de recommandation avec la commande du langage C "append()", pour ne pas effacer les recommandations produites par les enquêtes précédentes. Ils extraient ensuite les informations demandées sur le système analysé et le cas échéant écrivent des recommandations dans le fichier de recommandations. Avant de se terminer, ils doivent refermer le fichier de recommandation.

Toutes les fonctions externes doivent faire appel à des routines pour analyser le fichier de commande qui leur est transmis en paramètre. Une bonne solution sera donc de constituer une librairie logicielle avec ces routines. Typiquement, cette routine contiendra des fonctions pour récupérer le nombre de jauges dans le fichier de commande, pour obtenir le nom des jauges, pour obtenir les valeurs des seuils de recommandation et les symboles de relation associés, etc... Nous ne détaillerons pas ici cette librairie, car son écriture est une question de choix d'implémentation, à la portée de l'homme de l'art souhaitant modifier les fonctions de jauge.

De manière préférentielle, le fichier de jauge et le fichier de configuration indiquent deux seuils numériques associés aux jauges. Le premier seuil est le seuil à partir duquel une recommandation doit être émise par le dispositif de l'invention, selon la méthode décrite préalablement. Le second seuil, non illustré dans l'annexe, est un seuil d'alarme. Un module d'alarme, n'appartenant pas à l'invention et donc non décrit ici, est chargé d'inspecter en permanence le système 2, à l'aide par exemple de fonctions de jauge fonctionnant en arrière plan. Une alarme est émise dès que ces fonctions de jauge retournent des valeurs dans une certaine relation avec le seuil associé. L'alarme peut consister en un message sonore et l'affichage immédiat d'une fenêtre d'avertissement sur un écran connecté au dispositif.

Par exemple, une jauge mesurant la fragmentation d'un espace de table (tablespace) peut être chargée d'émettre une recommandation lorsque lors d'une utilisation périodique du dispositif de l'invention il s'avère que certains espaces de table (tablespaces) sont fragmentés de telle sorte que le fonctionnement du SGBD n'est plus optimal. Si en cours d'utilisation du SGBD le taux de fragmentation dépasse le seuil d'alarme au-delà duquel le fonctionnement du SGBD est considéré comme sérieusement dégradé, alors le module d'alarme fonctionnant en arrière plan émet aussitôt une alarme.

De cette manière, les informations concernant le dispositif de l'invention et celles concernant le module d'alarme peuvent être concentrées dans les mêmes fichiers de données. De manière préférentielle, le dispositif de l'invention peut fonctionner en mode de traitement par lots (mode "batch"). Il génère alors directement un fichier de commande à partir du fichier de configuration passé en paramètre et active le module moteur sans afficher préalablement l'interface graphique.

A titre d'exemple, afin de mieux expliciter la signification des notions de jauges, investigations et domaines, nous allons maintenant présenter l'utilisation du dispositif de l'invention pour un administrateur de base de données qui souhaite obtenir des informations sur l'état de ses bases de données et de son serveur. Le dispositif est donc personnalisé pour ce type particulier d'application uniquement en éditant les fichiers de jauges, d'investigations et de configuration et en créant des fonctions externes adaptées. Le module d'interface graphique, le module moteur et le module d'enquête ne sont pas modifiés par cette personnalisation. Cette partie de la description suppose un lecteur familier des notions concernant les SGBD, et plus particulièrement familier avec les SGBD relationnels tels que Oracle. Pour cette utilisation, trois domaines peuvent être considérés:
- "espace", qui regroupe toutes les investigations concernant la gestion de l'espace.
- "activité", qui regroupe toutes les investigations concernant l'activité de l'instance.
- "application", qui regroupe toutes les investigations concernant l'utilisation et le contenu de la base de données.
Le domaine espace regroupe les investigations "Espace objet", "Fragmentation", "Anomalie d'enregistrement", "Espace disque" et "quota utilisateur". Le domaine activité regroupe les investigations "Activité de l'instance", "Activité du SE (système d'exploitation)" et "Activité des retours arrière (Rollback)". Le domaine application regroupe les investigations "Contenu de l'objet" et "Mauvais objet".

Nous allons maintenant passer en revue ces investigations, à titre d'illustration. Chaque investigation est décomposée en jauges dont nous présentons la signification, le seuil associé et la recommandation associée.
- 1.1. L'investigation "Espace objet" regroupe toutes les jauges vérifiant le taux de remplissage de l'espace alloué aux objets cluster, index, segment de retour arrière (rollback), table et espace de table (tablespace) de la base de données. Elle est constituée des jauges suivantes:
   1.1.1. La jauge "espace utilisé par cluster/index/table rempli" recherche des objets dont l'espace utilisé dépasse le seuil en pour-cent de l'espace alloué. Recommandation: pour éviter l'extension dynamique et la fragmentation, recréez l'objet XXX dont le taux de remplissage est XX% avec des plus grandes valeurs de stockage notamment pour le paramètre INITIAL.
   1.1.2. La jauge "Espace utilisé par espace de table (tablespace) rempli" recherche des espaces de table (tablespaces) dont l'espace utilisé dépasse le seuil en pour-cent de l'espace alloué. Recommandation: l'espace de table (tablespace) XXX est presque plein (taux d'allocation XX%); ajoutez-lui un fichier pour l'agrandir ou ajoutez un espace de table (tablespace) pour agrandir l'espace de la base de données.
   1.1.3. La jauge "MAXEXTENT atteint" recherche des objets dont le nombre maximum d'extensions (extents) est atteint (pas de seuil numérique). Recommandation: le nombre maximum d'extensions (XX) de l'objet XXX est atteint; estimez la taille de l'objet et choisissez des paramètres de stockage tels que toutes les données puissent être mises dans une seule extension (par disque si l'objet est très gros); la taille de chaque extension par disque devant être assez grande pour contenir tous les blocs qui sont sur ce disque.
   1.1.4. La jauge "extension impossible" recherche des objets dont l'espace de table (tablespace) ne peut pas contenir la prochaine extension (pas de seuil numérique).
   Il peut y avoir deux origines pour son déclenchement, de sorte qu'il y aura deux recommandations associées, la fonction de jauge associée se chargeant de donner la bonne suivant l'origine.
   Recommandation 1 si l'espace de table (tablespace) est trop petit: l'espace de table (tablespace) YYY est trop petit pour contenir la prochaine extension de l'objet XXX; augmentez sa taille en lui ajoutant un fichier.
   Recommandation 2 si l'espace de table est trop fragmenté: l'espace de table YYY est trop fragmenté pour contenir la prochaine extension de l'objet XXX; la réorganisation de l'espace de table permettra l'extension.
- 1.2. L'investigation "fragmentation" regroupe toutes les jauges vérifiant la fragmentation des objets de la base de données. Elle est constituée des jauges suivantes:
   1.2.1. La jauge "trop d'extensions (extents)" recherche des objets dont le nombre d'extensions dépasse le seuil ou dont le nombre maximum d'extensions est atteint.
      Recommandation: l'objet XXX est trop fragmenté (XX extents, maximum MAXTEXTENTS); estimez la taille de l'objet et choisissez des paramètres de stockage tels que toutes les données puissent être mises dans une seule extension (par disque si l'objet est très gros); la taille de chaque extension par disque devant être assez grande pour contenir tous les blocs qui sont sur ce disque.
   1.2.2. La jauge "espace de table (tablespace) fragmenté" recherche des espaces de table dont la taille du plus gros trou est inférieure au seuil ou dont la taille moyenne d'une extension (extent) est plus grande que la taille du plus gros trou.
      Recommandation: l'espace de table XXX est trop fragmenté; réorganisez l'espace de table et peut-être même agrandissez-le.
   1.2.3. La jauge "fichier non continu" recherche des fichiers en plusieurs extensions (extents) sur le disque (point de vue du système d'exploitation SE). Recommandation: le fichier XXX est fragmenté sur le disque, cela crée des mouvements excessifs de la tête de lecture du disque qui diminuent les temps d'accès; réorganisez le fichier.
- 1.3. L'investigation "anomalie de stockage" regroupe les jauges concernant les autres anomalies sur l'utilisation de l'espace par les objets de la base de données.
   1.3.1. La jauge "Anomalie des extensions de segments de retour arrière (rollback segments)" recherche les segments de retour arrière dont les extensions (extents) ne sont pas de taille égale.
      Recommandation: le segment de retour arrière XXX a des extensions de taille inégale; ceci peut conduire à une mauvaise utilisation du segment de retour arrière par Oracle; recréez le segment de retour arrière avec les paramètres NEXT=INITIAL et PCTINCREASE=0.
- 1.4. L'investigation "Espace disque" regroupe les jauges concernant l'occupation de l'espace disque du point de vue du système d'exploitation.
   1.4.1. La jauge "Disque plein" recherche des disques dont le taux d'occupation a dépassé le seuil (en pour-cent de l'espace total du disque).
      Recommandation: le disque XXX a un taux d'occupation de XX%.
- 1.5. L'investigation "Quota de l'utilisateur" regroupe les jauges analysant les quotas d'utilisation de l'espace de la base de données.
   1.5.1. La jauge "Quota d'espace des utilisateurs" recherche des utilisateurs dont le taux d'utilisation de l'espace dépasse le seuil (en pour-cent de leur quota). Recommandation: l'utilisateur XXX approche son quota d'espace (taux d'utilisation XX%); augmentez le quota de l'utilisateur.
- 2.1. L'investigation "Activité de l'instance" regroupe les jauges analysant l'activité de l'instance.
- 2.2. L'investigation "Activité du SE" regroupe les jauges concernant l'activité du système d'exploitation.
- 2.3. L'investigation "Activité des retours arrière (rollbacks)" regroupe les jauges concernant l'activité des segments de retour arrière.
   2.3.1. La jauge "Segment de retour arrière dormant" recherche des segments de retour arrière non utilisés (pas de seuil numérique). Recommandation: le segment de retour arrière XXX n'est pas utilisé; s'il n'est pas utilisé par ailleurs, détruisez-le pour récupérer de l'espace.
   2.3.2. La jauge "Segment de retour arrière additionnel" vérifie qu'il n'y ait pas que le segment de retour arrière SYSTEM (pas de seuil numérique). Recommandation: seul le segment de retour arrière SYSTEM est actif; il est utilisé par le noyau et les processus en arrière-plan; créez un autre segment de retour arrière pour les applications.
- 3.1. L'investigation "Contenu des objets" regroupe les jauges concernant les anomalies dans le contenu des objets (cluster, index, table).
   3.1.1. La jauge "Bloc chaîné" recherche des tables dont le taux de blocs chaînés a dépassé un seuil (en pour-cent du nombre total de blocs). Recommandation: la table XXX a un taux de blocs chaînés de XX%; ceci augmente le nombre d'entrées/sorties; recréez la table avec un PCTFREE plus fort.
   3.1.2. La jauge "index vide" recherche les index dont le taux d'utilisation des blocs est inférieur au seuil en pour-cent, parmi les index presque pleins (taux d'occupation supérieur à 80 pour-cent de l'espace alloué).
      Recommandation: l'index XXX est presque plein et utilise mal l'espace (XX%); réorganisez-le.
- 3.2. L'investigation "Mauvais objet" regroupe les jauges concernant les anomalies de nom ou de définition d'objets.
   3.2.1. La jauge "Mauvaise vue" recherche des vues contenant des clauses GROUP BY, UNION, MINUS, INTERSECT ou des jointures externes (outer joint).
      Recommandation: la vue XXX contient des instructions obligeant Oracle à recalculer et enregistrer le contenu de la vue à chaque accès.
   3.2.2. La jauge "Nom inapproprié" recherche des objets qui ont même nom qu'un synonyme public.
      Recommandation: l'objet XXX de l'utilisateur YYY a même nom qu'un synonyme public; l'utilisateur ne peut pas accéder au synonyme.

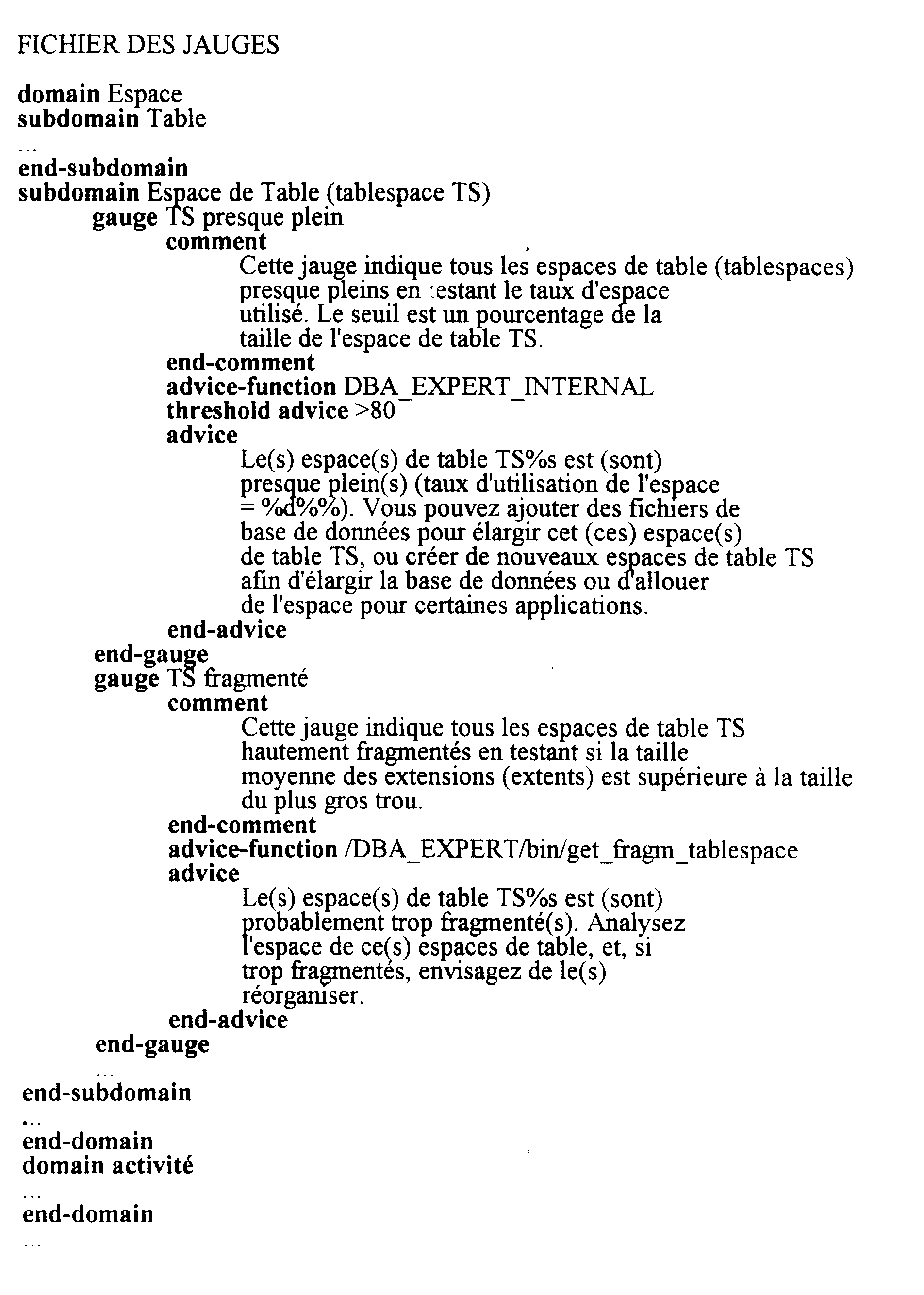

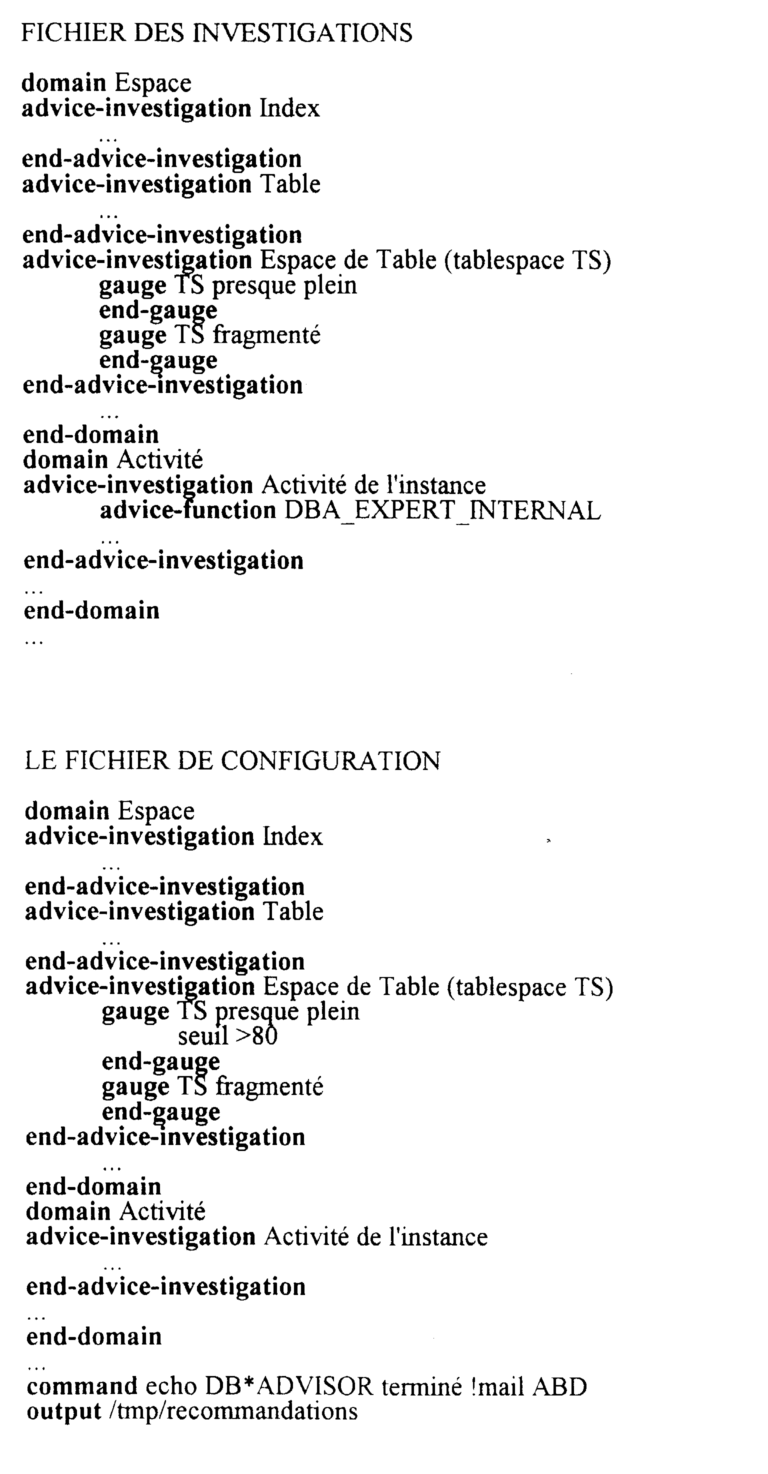

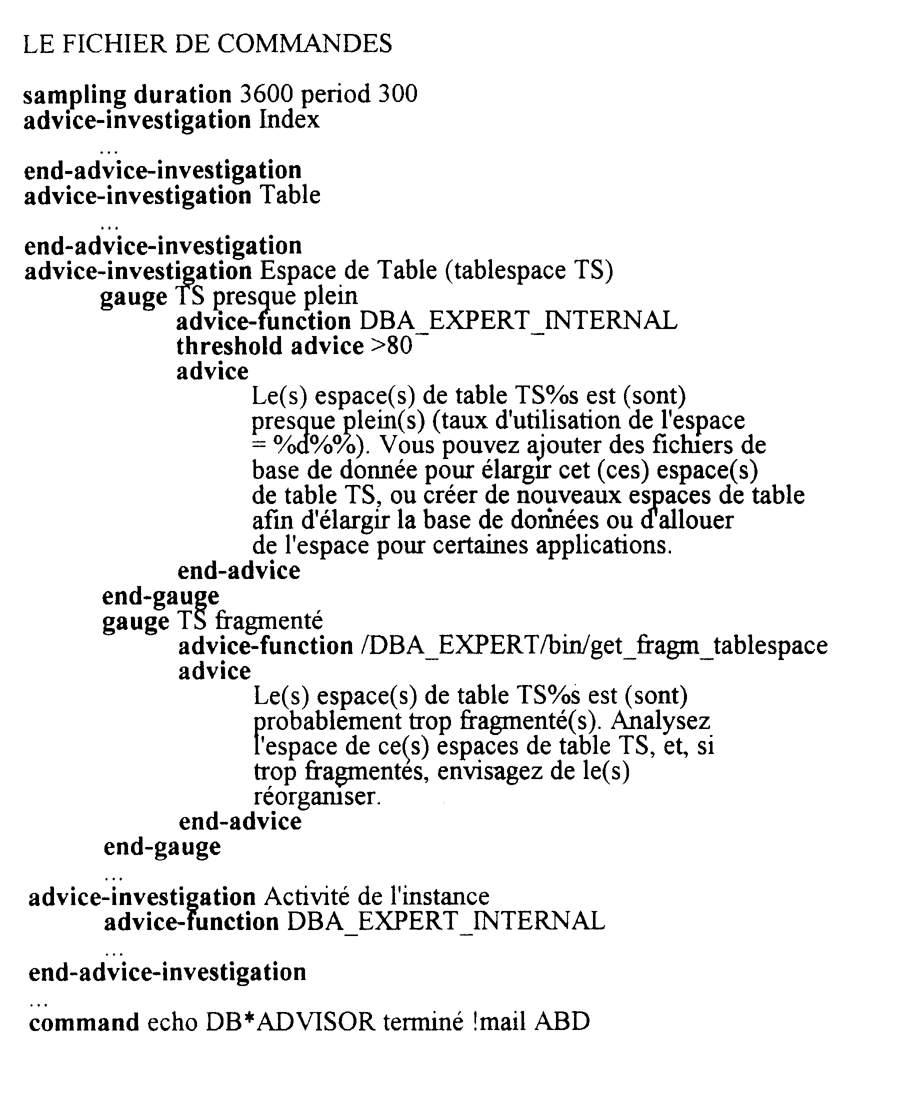

## Revendications

1. Procédé d'analyse de système à l'aide d'un ensemble de jauges, chaque jauge étant associée à au moins une fonction de jauge retournant une valeur dépendant de l'état du système analysé, la valeur retournée par les fonctions de jauge étant utilisée au cours du procédé pour afficher sur un écran ou écrire dans un fichier des recommandations pour le système, caractérisé en ce que les fonctions de jauge appliquées au système analysé sont contenues dans un fichier des jauges situé en un seul endroit et dont le format est de type texte, et en ce qu'il consiste à créer à partir de ce fichier des jauges un fichier de commandes pouvant être commandé par l'utilisateur pour contenir la désignation des fonctions de jauge à appliquer au système à analyser.

2. Procédé selon la revendication 1, caractérisé en ce qu'au moins une partie des fonctions de jauge est désignée dans le fichier des jauges et le fichier de commandes par le nom et le chemin de donnée d'un programme exécutable.

3. Procédé selon la revendication 1 ou 2, caractérisé en ce que au moins une partie des fonctions de jauge est désignée dans le fichier des jauges et le fichier de commandes par le texte d'une requête.

4. Procédé selon l'une des revendications précédentes, caractérisé en ce que chaque jauge est associée à au moins une recommandation et que la liste des recommandations est contenue dans un fichier de données.

5. Procédé selon l'une des revendication précédentes, caractérisé en ce que chaque jauge est en outre associée à au moins une valeur de seuil numérique ou logique, les recommandations sont émises lorsque les valeurs retournées par les fonctions de jauge sont dans une certaine relation avec le seuil associé, et la liste des valeurs de seuil numérique est contenue dans un fichier de données.

6. Procédé selon la revendication 5, caractérisé en ce que dans la liste des valeurs de seuil numérique un symbole (>, < , =, ...) est associé aux seuils numériques, ledit symbole indiquant si la recommandation associée doit être déclenchée lorsque la valeur retournée par la fonction de jauge associée passe au-dessus ou au-dessous du seuil ou lorsqu'elle n'a pas la valeur de seuil ou lors de toute autre relation logique entre la valeur de seuil et la valeur retournée par la fonction de jauge.

7. Procédé selon l'une des revendications précédentes, caractérisé en ce qu'il comprend un fichier de données d'alarmes pour contenir une liste de seuils d'alarme des jauges associées aux fonctions de jauges désignées dans le fichier de commandes.

8. Procédé selon l'une des revendications précédentes, caractérisé en ce que les jauges sont regroupées en investigations, et en ce qu'il met en oeuvre:
un fichier d'investigation comprenant la liste des investigations, des jauges constituant ces investigations et des désignations des fonctions de jauge globales associées à au moins une partie des investigations,
un fichier des jauge comprenant la liste de toutes les jauges, de toutes les recommandations associées, des seuils associés au moins à certaines jauges et des fonctions de jauge associées au moins à certaines jauges;
le fichier de commandes pouvant être établi à partir des données du fichier des jauges et des données du fichier d'investigation.

9. Procédé selon l'une des revendications précédentes, caractérisé en ce qu'il comporte une étape de sélection des jauges à appliquer au système à l'aide d'une interface graphique permettant de choisir un fichier de commandes, une étape d'application au système analysé des jauges listées dans le fichier de commandes à l'aide d'un module moteur, et une étape d'émission de recommandations à l'aide d'un module d'émission, et en ce que l'interface graphique, le module moteur et le module d'émission sont indépendants du système à analyser.

10. Procédé selon l'une des revendications précédentes, caractérisé en ce que l'interface graphique permet de visualiser sur un écran une liste au moins partielle des jauges contenues dans le fichier de commandes sélectionné et regroupées en investigations et de sélectionner les jauges et/ou les investigations que l'on veut lancer pour analyser ledit système.

11. Procédé selon l'une des revendications précédentes, caractérisé en ce que le fichier des jauges contient au moins une jauge de test de la fragmentation des tables d'un système de gestion de base de données.

12. Procédé selon l'une des revendications précédentes, caractérisé en ce que le fichier des jauges contient au moins une jauge de test de l'espace libre pour les tables d'un système de gestion de base de données.

13. Utilisation du procédé de l'une des revendications précédentes pour analyser un système de gestion de base de données (SGBD).

14. Système, notamment un système de gestion de base de données, caractérisé en ce qu'il comprend des moyens adaptés pour mettre en oeuvre le procédé défini par l'une des revendications 1 à 12.

## Patentansprüche

1. Verfahren zur Systemanalyse mit Hilfe einer Gesamtheit von Meßelementen, wovon jedem wenigstens eine Meßfunktion zugeordnet ist, die einen vom Zustand des analysierten Systems abhängenden Wert zurücksendet, wobei der von den Meßfunktionen zurückgesendete Wert im Lauf des Verfahrens verwendet wird, um Empfehlungen für das System auf einem Bildschirm anzuzeigen oder in eine Datei zu schreiben, dadurch gekennzeichnet, daß die Meßfunktionen, die auf das analysierte System ausgeübt werden, in einer Meßelementdatei enthalten sind, die sich an einem einzigen Ort befindet und deren Format vom Texttyp ist, und daß es darin besteht, anhand dieser Meßelementdatei eine Befehlsdatei zu erzeugen, die vom Anwender gesteuert werden kann, damit sie die Bezeichnung der Meßfunktionen, die auf das zu analysierende System ausgeübt werden, enthält.

2. Verfahren nach Anspruch 1, dadurch gekennzeichnet, daß wenigstens ein Teil der Meßfunktionen in der Meßelementdatei und in der Befehlsdatei durch den Namen und den Datenpfad eines ausführbaren Programms bezeichnet ist.

3. Verfahren nach Anspruch 1 oder 2, dadurch gekennzeichnet, daß wenigstens ein Teil der Meßfunktionen in der Meßelementdatei und in der Befehlsdatei durch den Text einer Anforderung bezeichnet ist.

4. Verfahren nach einem der vorangehenden Ansprüche, dadurch gekennzeichnet, daß jedem Meßelement wenigstens eine Empfehlung zugeordnet ist und daß die Liste der Empfehlungen in einer Datendatei enthalten ist.

5. Verfahren nach einem der vorangehenden Ansprüche, dadurch gekennzeichnet, daß jedem Meßelement außerdem wenigstens ein digitaler oder logischer Schwellenwert zugeordnet ist, wobei die Empfehlungen ausgesendet werden, wenn die von den Meßfunktionen zurückgesendeten Werte in einer bestimmten Beziehung zu der zugeordneten Schwelle stehen, wobei die Liste der digitalen Schwellenwerte in einer Datendatei enthalten ist.

6. Verfahren nach Anspruch 5, dadurch gekennzeichnet, daß in der Liste der digitalen Schwellenwerte den digitalen Schwellen ein Symbol (>, <, =, ...) zugeordnet ist, das angibt, ob die zugeordnete Empfehlung ausgelöst werden soll, wenn der von der zugeordneten Meßfunktion zurückgesendete Wert die Schwelle überschreitet oder unterschreitet oder wenn sie den Schwellenwert nicht besitzt oder wenn irgendeine andere logische Relation zwischen dem Schwellenwert und dem von der Meßfunktion zurückgesendeten Wert vorliegt.

7. Verfahren nach einem der vorangehenden Ansprüche, dadurch gekennzeichnet, daß es eine Alarmdatendatei enthält, die eine Liste von Alarmschwellen der Meßelemente enthält, die den in der Befehlsdatei bezeichneten Meßfunktionen zugeordnet sind.

8. Verfahren nach einem der vorangehenden Ansprüche, dadurch gekennzeichnet, daß die Meßelemente bei Untersuchungen umgruppiert werden und daß es verwendet:
eine Untersuchungsdatei, die die Liste von Untersuchungen, von diese Untersuchungen bildenden Meßelemente sowie von Bezeichnungen von globalen Meßfunktionen, die wenigstens einem Teil der Untersuchungen zugeordnet sind, enthält,
eine Meßelementdatei, die die Liste sämtlicher Meßelemente, sämtlicher zugeordneter Empfehlungen, der zugeordneten Schwellen wenigstens für bestimmte Meßelemente und der Meßfunktionen, die wenigstens bestimmten Meßelementen zugeordnet sind, enthält;
wobei die Befehlsdatei anhand der Daten der Meßelementdatei und der Daten der Untersuchungsdatei erstellt werden kann.

9. Verfahren nach einem der vorangehenden Ansprüche, dadurch gekennzeichnet, daß es enthält: einen Schritt der Wahl von Meßelementen, die auf ein System mit Hilfe einer graphischen Schnittstelle angewendet werden sollen, die die Wahl einer Befehlsdatei ermöglicht, einen Schritt des Anwendens von Meßelementen auf das analysierte System, die in der Befehlsdatei mit Hilfe eines Motormoduls aufgelistet sind, und einen Schritt des Aussendens von Empfehlungen mit Hilfe eines Aussendemoduls, und daß die graphische Schnittstelle, das Motormodul und das Aussendemodul von dem zu analysierenden System unabhängig sind.

10. Verfahren nach einem der vorangehenden Ansprüche, dadurch gekennzeichnet, daß die graphische Schnittstelle ermöglicht, wenigstens einen Teil der Liste von Meßelementen auf einem Bildschirm sichtbar zu machen, wobei die Meßelemente in der gewählten Befehlsdatei enthalten sind und bei Untersuchungen umgruppiert werden, und die Meßelemente und/oder die Untersuchungen zu wählen, die gestartet werden sollen, um das System zu analysieren.

11. Verfahren nach einem der vorangehenden Ansprüche, dadurch gekennzeichnet, daß die Datei von Meßelementen wenigstens ein Meßelement zum Testen der Fragmentierung der Tabellen eines Datenbank-Steuersystems enthält.

12. Verfahren nach einem der vorangehenden Ansprüche, dadurch gekennzeichnet, daß die Datei von Meßelementen wenigstens ein Meßelement zum Testen des freien Raums für die Tabellen eines Datenbank-Steuersystems enthält.

13. Verwendung des Verfahrens nach einem der vorangehenden Ansprüche für die Analyse eines Datenbank-Steuersystems (SGBD).

14. System, insbesondere Datenbank-Steuersystem, dadurch gekennzeichnet, daß es Mittel enthält, die so beschaffen sind, daß sie das durch einen der Ansprüche 1 bis 12 definierte Verfahren ausführen.

## Claims

1. Method for analysing a system using a set of gauges, each gauge being associated with at least one gauge function returning a value depending on the state of the system analysed, the value returned by the gauge functions being used during the method for displaying on a screen or writing to a file recommendations for the system, characterised in that the gauge functions applied to the system analysed are contained in a file of gauges located at a single location and the format of which is of text type, that it consists in creating on the basis of this file of gauges a file of commands that can be controlled by the user to contain the designation of gauge functions to be applied to the system to be analysed.

2. Method according to Claim 1, characterised in that at least one part of the gauge functions is designated in the file of gauges and the file of commands by the name and the data path of an executable program.

3. Method according to Claim 1 or 2, characterised in that at least one part of the gauge functions is designated in the file of gauges and the file of commands by the text of a request.

4. Method according to one of the preceding claims, characterised in that each gauge is associated with at least one recommendation and that the list of recommendations is contained in a data file.

5. Method according to one of the preceding claims, characterised in that each gauge is also associated with at least one numerical or logical threshold value, the recommendations are emitted when the values returned by the gauge functions are in a certain relationship with the associated threshold, and the list of numerical threshold values is contained in a data file.

6. Method according to Claim 5, characterised in that in the list of numerical threshold values a symbol (>, <, =, ...) is associated with the numerical thresholds, said symbol indicating whether the associated recommendation has to be triggered when the value returned by the associated gauge function goes above or below the threshold or when it does not have the threshold value or at the time of any other logical relationship between the threshold value and the value returned by the gauge function.

7. Method according to one of the preceding claims, characterised in that it comprises a file of alarm data to contain a list of alarm thresholds for the gauges associated with the gauge functions designated in the command file.

8. Method according to one of the preceding claims, characterised in that the gauges are grouped into investigations, and in that it uses:
an investigation file comprising the list of investigations, the gauges constituting these investigations and the designations of the overall gauge functions associated with at least part of the investigations,
a gauge file comprising the list of all the gauges, all the associated recommendations, the thresholds associated with at least some gauges and the gauge functions associated with at least some gauges;
the command file being capable of being established on the basis of data from the gauge file and data from the investigation file.

9. Method according to one of the preceding claims, characterised in that it comprises a step of selection of gauges to be applied to the system using a graphical interface making it possible to choose a command file, a step of application to the analysed system of the gauges listed in the command file using a motor module, and a step of transmission of recommendations using a transmission module, and in that the graphical interface, the motor module and the transmission module are independent of the system to be analysed.

10. Method according to one of the preceding claims, characterised in that the graphical interface makes it possible to visualise on a screen at least a partial list of gauges contained in the selected command file and grouped into investigations, and to select the gauges and/or the investigations that are to be launched in order to analyse said system.

11. Method according to one of the preceding claims, characterised in that the file of gauges contains at least one gauge for testing the fragmentation of the tables of a database management system.

12. Method according to one of the preceding claims, characterised in that the file of gauges contains at least one gauge for testing the free space for the tables of a database management system.

13. Use of the method of one of the preceding claims in order to analyse a database management system (SGBD).

14. System, particularly a database management system, characterised in that it comprises means suitable for implementing the method defined by one of Claims 1 to 12.
